# EUROPÄISCHE PATENTSCHRIFT

(11) **EP 0 940 816 B1**
(45) Veröffentlichungstag und Bekanntmachung des Hinweises auf die Patenterteilung: **21.06.2006**
(21) Anmeldenummer: 99102580.0
(22) Anmeldetag: 11.02.1999
(51) Int. Cl.: G11B 31/00, H04M 1/64

(54) **Diktiergerät**
Dictation apparatus
Appareil à dicter

(30) Priorität: 02.03.1998 DE 19808470
(43) Veröffentlichungstag der Anmeldung: 08.09.1999
(73) Patentinhaber: GBS Holding GmbH, 85598 Baldham bei München (DE)
(72) Erfinder: Keller, Klaus c/o GRUNDIG AG, 90762 Fürth (DE); Rinck, Cornelius c/o GRUNDIG AG, 90762 Fürth (DE)
(74) Vertreter: Pröll, Jürgen

(56) Entgegenhaltungen:
- WO-A-94/20899
- DE-A- 3 304 852
- DE-A- 4 319 853
- DE-A- 19 704 009
- DE-U- 29 723 223
- US-A- 5 319 620
- US-A- 5 398 220

## Beschreibung

Die Erfindung betrifft ein Diktiergerät, welches ein Diktiergerätegehäuse aufweist, in welchem ein Mikrophon, ein Lautsprecher und eine Aufzeichnungs-/Wiedergabesignalverarbeitungsschaltung vorgesehen sind, wobei das Diktiergerätegehäuse mit einer Kopfhörer-Ausgangsbuchse versehen ist, an welcher während der Wiedergabe von in einem Signalspeichermedium abgespeicherten Signalen Audiosignale zur Verfügung gestellt werden.

Derartige Diktiergeräte sind bereits bekannt und werden von vielen Firmen am Markt angeboten. Beispielsweise wurde ein solches Diktiergerät von der Fa. Philips unter der Bezeichnung "390 POCKET MEMO" und von der Fa. Grundig unter der Bezeichnung "Dh 2220" verkauft. Mittels dieser bekannten Diktiergeräte können vom Mikrophon aufgenommene Sprachsignale nach Verarbeitung in einer Aufzeichnungsschaltung auf das Magnetband einer in das Diktiergerät eingelegten Diktiergeräte-Kassette aufgezeichnet werden. Weiterhin können mittels dieser bekannten Diktiergeräte auch die auf einer Diktiergeräte-Kassette aufgezeichnete Signale nach Verarbeitung in einer Wiedergabeschaltung über den Lautsprecher des Diktiergerätes wiedergegeben und an einer Kopfhörer-Ausgangsbuchse zur Verfügung gestellt werden.

Aus DE 197 04 009 A1 ist ein Spracherkennungssystem zur Umsetzung eingespeister elektronischer Sprachsignale in zur elektronischen Datenverarbeitung geeignete Daten bekannt. Hierzu ist eine vorgeschaltete Pegelangleichvorrichtung zum Anpassen der Pegel der elektronischen Sprachsignale an eine vorbestimmte Bandbreite vorhanden. Die Pegelangleichvorrichtung ist vorteilhafterweise an einem Mikrofon-Eingang des Spracherkennungssystems anschließbar. An die Pegelangleichvorrichtung ist wahlweise ein Mikrofon oder ein Tonträgerabspielgerät anschließbar.

Aus US 5,398,220 A1 ist eine tragbare Sprachaufzeichnungseinheit bekannt, welche die Merkmale des Oberbegriffs von Ansprüch 1 enthält. Diese Einheit umfasst ein Mikrofon zur Umsetzung der Sprachsignale in elektronische Signale. Im Weiteren ist ein Analog-Digital-Umsetzer vorhanden, welcher die empfangenen elektronischen Signale, welche aus dem Sprachsignal gewonnen wurden, in Digitalsignale umsetzt und in einem Speicher abspeichert. Auf eine Benutzeranfrage hin kann das gespeicherte digitale Signal über einen Digital-Analog-Wandler über einen Lautsprecher ausgegeben werden. Im Weiteren kann über einen weiteren Ausgangskanal das gespeicherte digitale Signal zu einer externen Verarbeitungseinheit übertragen werden.

Ausgehend von diesem Stand der Technik liegt der Erfindung die Aufgabe zugrunde, die Nutzungsmöglichkeiten der bekannten Diktiergeräte zu erweitern.

Diese Aufgabe wird bei einem Diktiergerät mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen 2 bis 8. Die Ansprüche 9 bis 11 betreffen die Verwendung eines Diktiergerätes nach einem der Ansprüche 1 bis 8 als Eingabeelement zur Eingabe von Sprachsignalen in einen Sprache-Text-Umsetzer.

Die Vorteile eines Diktiergerätes mit denen im Anspruch 1 angegebenen Merkmalen bestehen insbesondere darin, daß das Diktiergerät als Quelle für Sprachsignale verwendet werden kann, die in einem beliebigen anderen System benötigt werden, insbesondere in einem System, welches zur Umsetzung von gesprochener Sprache in geschriebenen Text vorgesehen ist, oder in einem System zur Sprachanalyse. Werden die vom Mikrophon des Diktiergerätes aufgenommenen Signale nicht nur über die weitere Anschlußbuchse an das andere System ausgegeben, sondern zusätzlich mittels eines Speichermediums aufgezeichnet, dann stehen für spätere Kontrollzwecke die an das andere System übertragenen Signale in Form einer Speicherkopie zur Verfügung.

Mittels der im Anspruch 2 angegebenen Merkmale wird erreicht, daß bestimmte Baugruppen der Aufzeichnungs-/Wiedergabesignalverarbeitungsschaltung sowohl bei Aufzeichnung als auch bei Wiedergabe verwendet werden können, so daß diese Baugruppen nicht doppelt vorhanden sein müssen.

Die Vorteile der Merkmale des Anspruchs 3 bestehen darin, daß innerhalb des Diktiergerätes nur eine einzige Signalleitung zur weiteren Anschlußbuchse vorgesehen sein muß, um dort entweder vom Mikrophon abgeleitete Signale oder vom Speichermedium wiedergegebene Signale zur Verfügung stellen zu können. Denn die im Anspruch 3 genannte Entzerrerschaltung ist sowohl im Aufzeichnungssignalweg als auch im Wiedergabesignalweg des Diktiergerätes angeordnet.

Durch die im Anspruch 5 angegebene Pegel-Anpassungsstufe wird sichergestellt, daß an der weiteren Anschlußbuchse stets ein Signal gleichen Pegels zur Verfügung gestellt wird, welches bei einer Ableitung des Signals vom Mikrophon unabhängig von der Lautstärke des aufgenommenen Sprachsignals und bei einer Ableitung des Signals vom Speichermedium unabhängig von der mittels des Lautstärkestellers des Diktiergerätes eingestellten Lautstärke ist.

Der im Anspruch 6 angegebene Buchsenbelegungsdetektor erkennt stets, wenn an die weitere Anschlußbuchse ein Signalkabel angeschlossen ist. Von seinem Ausgangssignal können diktiergeräteinterne Umschaltvorgänge ausgelöst werden, beispielsweise des der Aufzeichnungs-Wiedergabesignalverarbeitungsschaltung zugehörigen Entzerrers oder der Pegel-Anpassungsstufe.

Die im Anspruch 8 angegebene bidirektionale Signalübertragung erlaubt es, von dem an die weitere Anschlußbuchse angeschlossenen System gelieferte Signale über den Lautsprecher des Diktiergerätes wiederzugeben. Dies ist beispielsweise in der Lernphase oder bei Textkorrekturen nach der Umwandlung von Sprache in Text eines Sprache-Text-Umsetzers von Bedeutung, wenn dem Benutzer akustisch aufgezeigt werden soll, welches Sprachsignal vom Spracherkennungs-Programm des Sprache-Text-Umsetzers in welches Textsignal umgewandelt wurde, wobei das genannte Textsignal an einer mit dem Sprache-Text-Umsetzer zusammenwirkenden Anzeigevorrichtung dargestellt wird. Dadurch kann der Benutzer ein nicht erkanntes Wort oder eine nicht erkannte Textpassage korrigieren oder nochmals aufsprechen und den Sprache-Text-Umsetzer an sprecherspezifische Eigenschaften gewöhnen.

Die Ansprüche 9 bis 11 zeigen auf, wie ein Diktiergerät mit den Merkmalen der Erfindung in vorteilhafter Weise als Sprachsignaleingabeelement für einen Sprache-Text-Umsetzer verwendet werden kann.
Weitere vorteilhafte Eigenschaften der Erfindung ergeben sich aus der beispielhaften Erläuterung der Erfindung anhand der Figuren.

Es zeigt
- FIG 1: ein Blockschaltbild eines Diktiergerätes nach einem ersten Ausführungsbeispiel für die Erfindung;
- FIG 2: ein Blockschaltbild eines Diktiergerätes nach einem zweiten Ausführungsbeispiel für die Erfindung; und
- FIG 3: eine Skizze zur Veranschaulichung der Verwendung eines Diktiergerätes gemäß der Erfindung in Verbindung mit einem Sprache-Text-Umsetzer.

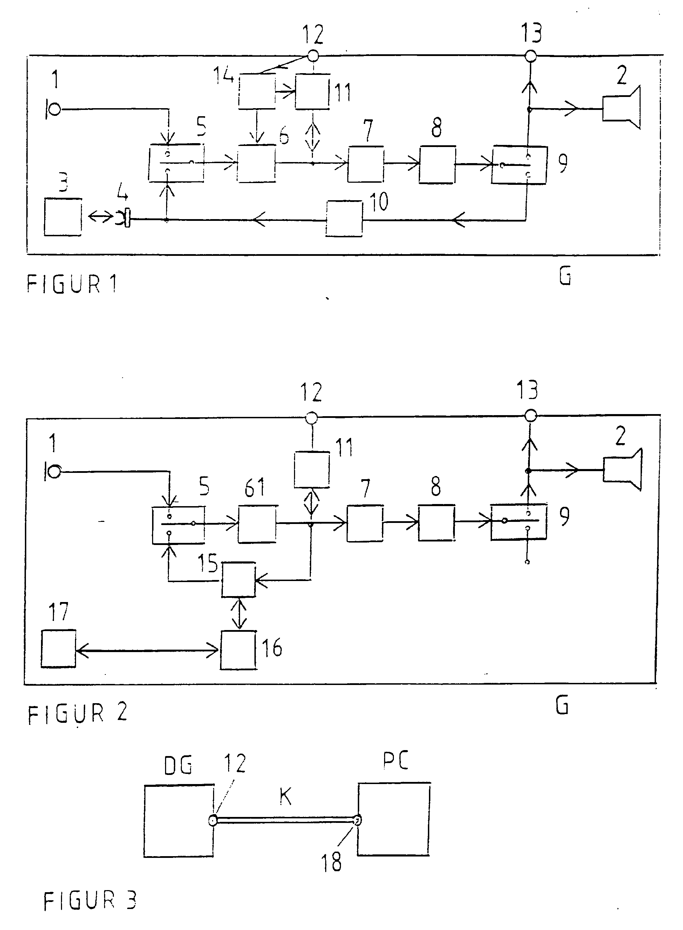

Die Figur 1 zeigt ein Blockschaltbild eines Diktiergerätes nach einem ersten Ausführungsbeispiel für die Erfindung, bei welchem die Signale in analoger Form auf das Magnetband einer Diktiergeräte-Kassette aufgezeichnet werden.

Das dargestellte Diktiergerät weist ein Diktiergerätegehäuse G auf, in welchem ein Mikrophon 1, ein Lautsprecher 2 und eine Aufzeichnungs-/Wiedergabesignalverarbeitungsschaltung vorgesehen sind. Letzterer gehören ein erster Aufzeichnungs-/Wiedergabe-Umschalter 5, ein Vorverstärker und Entzerrer 6, ein Pegelsteller 7, eine Endstufe 8, ein zweiter Aufzeichnungs-/Wiedergabe-Umschalter 9, eine Schaltung zur Vormagnetisierung und Entzerrung 10 und ein Aufzeichnungs-/Wiedergabe-Tonkopf 4 an. Weiterhin weist das gezeigte Diktiergerät eine Kopfhörerbuchse 13 und eine eingesetzte Diktiergeräte-Kassette 3 auf.

Mittels eines derartigen Diktiergerätes können vom Mikrophon 1 aufgenommene Sprachsignale nach einer aufzeichnungsseitigen Signalverarbeitung auf dem Magnetband der Diktiergeräte-Kassette 3 aufgezeichnet werden. Weiterhin können mittels eines derartigen Diktiergerätes auf dem Magnetband der Diktiergeräte-Kassette 3 aufgezeichnete Signale nach einer wiedergabeseitigen Signalverarbeitung über den Lautsprecher 2 wiedergegeben und an der Kopfhörerbuchse 13 zur Verfügung gestellt werden.

Im Rahmen der aufzeichnungsseitigen Signalverarbeitung werden die vom Mikrophon 1 abgeleiteten Signale einem ersten Eingang des Schalters 5 zugeführt. Von dort aus gelangen die Signale über den beim Aufzeichnungsvorgang für Signale am ersten Eingang durchlässigen Schalter 5 an den Vorverstärker und Entzerrer 6. Dessen Ausgangssignale werden über den Pegelsteller 7 und die Endstufe 8 an den Eingang des zweiten Aufzeichnungs-/Wiedergabe-Umschalters 9 gelegt, der sich beim Aufzeichnungsvorgang in seiner unteren Schaltstellung befindet, so daß die Ausgangssignale der Endstufe 8 an die Schaltung 10 zur Vormagnetisierung und Entzerrung weitergeleitet werden. Deren Ausgangssignale wiederum werden dem Aufzeichnungs-/Wiedergabe-Tonkopf 4 zugeführt und auf das Magnetband der Diktiergeräte-Kassette 3 übertragen.

Im Rahmen der wiedergabeseitigen Verarbeitung, die durch das Betätigen einer nicht dargestellten Wiedergabetaste des Diktiergerätes eingeleitet wird, werden die vom Magnetband der Diktiergeräte-Kassette wiedergegebenen Signale einem zweiten Eingang des ersten Aufzeichnungs-/Wiedergabe-Umschalters 5 zugeführt. Dieser wurde durch das Betätigen der Wiedergabetaste in seine untere Schaltstellung umgeschaltet, so daß die vom Magnetband wiedergegebenen Signale über den Schalter 5 an den Vorverstärker und Entzerrer 6 gelangen. Dessen Ausgangssignale werden über den Pegelsteller 7 und die Endstufe 8 an den Eingang des zweiten Aufzeichnungs-/Wiedergabe-Umschalters 9 angelegt. Dieser wurde durch das Betätigen der Wiedergabetaste des Diktiergerätes in seine obere Schaltstellung umgeschaltet, so daß beim Wiedergabevorgang die Ausgangssignale der Endstufe 8 über den Lautsprecher 2 wiedergegeben und an der Kopfhörerbuchse 13 des Diktiergerätes zur Verfügung gestellt werden.

Weiterhin werden die Ausgangssignale des Vorverstärkers und Entzerrers 6 über eine Pegel-Anpassungsstufe 11 an einer weiteren Anschlußbuchse 12 des Diktiergerätes zur Verfügung gestellt. Da der Vorverstärker und Entzerrer 6 sowohl im Aufzeichnungs- als auch im Wiedergabesignalweg angeordnet ist, werden an der weiteren Anschlußbuchse 12 im Aufzeichnungsbetrieb unabhängig davon, ob eine Diktiergeräte-Kassette in das Diktiergerät eingesetzt ist oder nicht, vom Mikrophon 1 abgeleitete Signale, und im Widergabebetrieb von der Diktiergeräte-Kassette wiedergegebene Signale zur Verfügung gestellt. Diese Signale können über ein an die weitere Anschlußbuchse 12 angeschlossenes Kabel einem anderen System zugeführt werden, beispielsweise einem Sprachanalysator oder einem Sprache-Text-Umsetzer, wie er unten im Zusammenhang mit Figur 3 erläutert wird.

An der weiteren Anschlußbuchse 12 werden stets Signale gleichen Pegels bereitgestellt. Dies wird mittels der Pegel-Anpassungsstufe 11 erreicht, über die das Signal geführt wird.

Die Entzerrercharakteristik des Entzerres 6 ist in vorteilhafter Weise umschaltbar. Zu diesem Zweck wird beim Einstecken des Steckers des Verbindungskabels in die weitere Anschlußbuchse 12 ein nicht gezeichneter Schalterkontakt geschlossen, was vom Buchsenbelegungsdetektor 14 erkannt wird. Dieser erzeugt daraufhin ein Steuersignal bzw. Umschaltsignal, aufgrund dessen die Entzerrercharakteristik des Entzerrers 6 geändert wird. Beispielsweise wird bei belegter weiterer Anschlußbuchse 12 die Bandbreite der die Baugruppe 6 passierenden Signale im Vergleich zum unbelegten Zustand der Anschlußbuchse 12 vergrößert.

Die Figur 2 zeigt ein Blockschaltbild eines Diktiergerätes nach einem zweiten Ausführungsbeispiel für die Erfindung, bei welchem die Signale in digitaler Form auf ein als Halbleiterspeicher 17 realisiertes Aufzeichnungsmedium aufgezeichnet werden.

Das dargestellte Diktiergerät weist ein Diktiergerätegehäuse G auf, in welchem ein Mikrophon 1, ein Lautsprecher 2 und eine Aufzeichnungs-/Wiedergabesignalverarbeitungsschaltung vorgesehen sind. Letzterer gehören ein erster Aufzeichnungs-/Wiedergabe-Umschalter 5, ein Vorverstärker 61, ein Pegelsteller 7, eine Endstufe 8, ein zweiter Aufzeichnungs-/Wiedergabe-Umschalter 9, eine Wandlereinheit 15 mit einem Analog-Digital-Wandler und einem Digital-Analog-Wandler sowie eine Prozessoreinheit 16 an, welche zu einer Datenkompression und -expansion sowie zur Adressierung des Halbleiterspeichers 17 vorgesehen ist. Weiterhin weist das gezeigte Diktiergerät eine Kopfhörerbuchse 13 auf.

Mittels eines derartigen Diktiergerätes können vom Mikrophon 1 aufgenommene Sprachsignale nach einer aufzeichnungsseitigen Signalverarbeitung in den Speicherplätzen des Halbleiterspeichers 17 aufgezeichnet werden. Weiterhin können mittels eines derartigen Diktiergerätes im Halbleiterspeicher 17 abgespeicherte Signale nach einer wiedergabeseitigen Signalverarbeitung über den Lautsprecher 2 wiedergegeben und an der Kopfhörerbuchse 13 zur Verfügung gestellt werden.

Im Rahmen der aufzeichnungsseitigen Signalverarbeitung werden die vom Mikrophon 1 abgeleiteten Signale einem ersten Eingang des Schalters 5 zugeführt. Von dort aus gelangen die Signale über den beim Aufzeichnungsvorgang für Signale am ersten Eingang durchlässigen Schalter 5 an den Vorverstärker 61. Dessen Ausgangssignale werden im Wandier 15 einer Analog-Digital-Wandlung unterworfen und in digitaler Form an die Prozessoreinheit 16 weitergegeben. In dieser erfolgt eine Kompression der aufzuzeichnenden Daten, die dann im Halbleiterspeicher 17 abgespeichert werden, wobei die Prozessoreinheit 16 auch für das zugehörige Speichermanagement, d.h. die Adressierung dieses Speichers zuständig ist. Da der zweite Aufzeichnungs-/Wiedergabe-Umschalter 9 sich während des Aufzeichnungsvorganges in seiner unteren Schaltstellung befindet, werden während der Aufzeichnung keine Signale an den Lautsprecher 2 und an die Kopfhörerbuchse 13 ausgegeben.

Im Rahmen der wiedergabeseitigen Signalverarbeitung, die durch das Betätigen einer nicht dargestellten Wiedergabetaste des Diktiergerätes eingeleitet wird, werden die aus dem Halbleiterspeicher wiedergegebenen Signale mittels der Prozessoreinheit 16 dekomprimiert und nach einer Digital-Analog-Wandlung in der Wandlereinheit 15 an den zweiten Eingang des ersten Aufzeichnungs-/Wiedergabe-Umschalters 5 angelegt. Dieser wurde durch das Betätigen der Wiedergabetaste in seine untere Schaltstellung umgeschaltet, so daß die aus dem Halbleiterspeicher wiedergegebenen Signale über den Schalter 5 an den Vorverstärker 61 gelangen. Dessen Ausgangssignale werden über den Pegelsteller 7 und die Endstufe 8 an den Eingang des zweiten Aufzeichnungs-/Wiedergabe-Umschalters 9 angelegt. Auch dieser wurde durch das Betätigen der Wiedergabetaste des Diktiergerätes in seine andere Schaltstellung umgeschaltet, so daß beim Wiedergabevorgang die Ausgangssignale der Endstufe 8 über den Lautsprecher 2 wiedergegeben und am Kopfhörerausgang 13 des Diktiergerätes zur Verfügung gestellt werden.

Weiterhin werden die Ausgangssignale des Vorverstärkers 61 über eine Pegel-Anpassungsstufe 11 an einer weiteren Anschlußbuchse 12 des Diktiergerätes zur Verfügung gestellt. Da der Vorverstärker 61 sowohl im Aufzeichnungs- als auch im Wiedergabesignalweg angeordnet ist, werden an der weiteren Anschlußbuchse 12 im Aufzeichnungsbetrieb vom Mikrophon 1 abgeleitete Signale und im Wiedergabebetrieb aus dem Halbleiterspeicher 17 wiedergegebene Signale zur Verfügung gestellt. Diese Signale können über ein an die weitere Anschlußbuchse 12 angeschlossenes Kabel einem anderen System zugeführt werden, beispielsweise einem Sprachanalysator oder einem Sprache-Text-Umsetzer, wie er unten im Zusammenhang mit Figur 3 erläutert wird.

An der weiteren Anschlußbuchse 12 werden stets Signale gleichen Pegels bereitgestellt. Dies wird mittels der Pegel-Anpassungsstufe 11 erreicht, über die das Signal geführt wird.

Die Figur 3 zeigt eine Skizze zur Veranschaulichung der Verwendung eines Diktiergerätes gemäß der Erfindung in Verbindung mit einem Sprache-Text-Umsetzer.

Die weitere Anschlußbuchse 12 des Diktiergerätes G ist über ein Signalkabel K mit einer Mikrophonbuchse 18 eines Personal Computers PC verbunden. Der PC weist eine Tastatur, einen Bildschirm, eine Rechnereinheit, Speichermittel sowie ein Soundkarte auf. Die dem PC über das Signalkabel K zugeführten Signale werden in der Soundkarte zu einer Audioadaption verwendet, die zur Anpassung der vom Diktiergerät gelieferten Signale an die im PC vorhandene Sprache-Text-Umwandlungssoftware notwendig ist. Eine derartige Sprache-Text-Umwandlungssoftware ist bereits am Markt verfügbar und beispielsweise unter den Bezeichnungen "DRAGON-Naturally Speaking" und "IBM-Via-Voice" bekannt. Vor der praktischen Inbetriebnahme einer derartigen Software ist zunächst eine Lernphase durchzuführen, die zur Gewöhnung des Systems an den jeweiligen Sprecher vorgesehen ist.

Nach alledem kann ein Diktiergerät gemäß der Erfindung als Signalquelle für einen Sprache-Text-Umsetzer verwendet werden, wobei in einer ersten Ausführungsform das Diktiergerät im wesentlichen als Mikrophon dient, welches an die Mikrophonbuchse des Sprache-Text-Umsetzers angeschlossen wird und wobei in einer zweiten Ausführungsform eine bereits bespielte Diktiergeräte-Kassette oder ein bereits mit (komprimierten) Sprachdaten versehener Halbleiterspeicher als Signalquelle dienen.

Gemäß einer vorteilhaften Weiterbildung der Erfindung ist zwischen dem PC und dem Diktiergerät eine bidirektionale Signalübertragung vorgesehen. Diese bidirektionale Signalübertragung erlaubt es beispielsweise, in der Lernphase oder bei Textkorrekturen nach umgewandelter Sprache in Text auch Wörter oder Textpassagen, die vom Computer nicht erkannt wurden, über den Lautsprecher des Diktiergerätes wiederzugeben, so daß der Benutzer diese nicht erkannten Wörter oder Textpassagen korrigieren oder auch nochmals aufsprechen kann.
Hierzu ist das Kabel K mit der Lautsprecherbuchse eines Personal-Computers PC verbunden.

Eine Signalübertragung vom Diktiergerät zum PC und umgekehrt ist in vorteilhafter Weise völlig unabhängig davon, ob ein Speichermedium in das Diktiergerät eingesetzt ist oder nicht. Weiterhin muß der Benutzer im Vergleich zur Handhabung eines herkömmlichen Diktiergerätes keinerlei zusätzlichen Bedienungsmaßnahmen durchführen, um an der weiteren Anschlußbuchse Signale zur Verfügung zu stellen. Die Bedienung eines Diktiergerätes nach der Erfindung erfolgt ebenso wie die Bedienung eines herkömmlichen Diktiergerätes, so daß der Benutzer keine neuen Bedienungsschritte lernen muß.

## Patentansprüche

1. Diktiergerät, welches ein Diktiergerätegehäuse (G) aufweist, in welchem ein Mikrophon (1), ein Lautsprecher (2) und eine Aufzeichnungs-/Wiedergabesignalverarbeitungsschaltung vorgesehen sind, wobei das Diktiergerätegehäuse (G) mit einer Kopfhörer-Ausgangsbuchse (13) versehen ist, an welcher während der Wiedergabe von auf einem Signalspeichermedium aufgezeichneten Signalen Ausgangssignale zur Verfügung gestellt werden,
**dadurch gekennzeichnet , dass**
das Diktiergerätegehäuse (G) mit einer weiteren Anschlussbuchse (12) versehen ist, an welcher in einer ersten Betriebsart vom Mikrophon (1) des Diktiergerätes abgeleitete Signale und in einer zweiten Betriebsart vom Signalspeichermedium (3, 17) abgeleitete Signale zur Verfügung gestellt werden.

2. Diktiergerät nach Anspruch 1,
**dadurch gekennzeichnet,dass**
die Aufzeichnungs-/Wiedergabesignalverarbeitungsschaltung einen Aufzeichnungs-/Wiedergabe-Umschalter (5) aufweist, an dessen erstem Eingang das vom Mikrophon (1) abgeleitete Signal und an dessen zweitem Eingang das vom Signalspeichermedium (3, 17) abgeleitete Signal anliegt und dessen Ausgang mit einer Entzerrerschaltung (6) verbunden ist.

3. Diktiergerät nach Anspruch 2,
**dadurch gekennzeichnet, dass**
das an der weiteren Anschlussbuchse (12) zur Verfügung gestellte Signal vom Ausgang der Entzerrerschaltung (6) abgeleitet ist.

4. Diktiergerät nach einem der vorhergehenden Ansprüche,
**dadurch gekennzeichnet, dass**
die der weiteren Anschlussbuchse (12) zugeführten Signale über eine Pegel-Anpasssungsstufe (11) geleitet werden.

5. Diktiergerät nach Anspruch 4,
**dadurch gekennzeichnet , dass**
der Pegel der am Ausgang der Pegel-Anpassungsstufe (11) zur Verfügung gestellten Signale gleich ist.

6. Diktiergerät nach einem der vorhergehenden Ansprüche,
**dadurch gekennzeichnet,dass**
es einen Buchsenbelegungsdetektor (14) aufweist, welcher in der zweiten Betriebsart bei an die weitere Anschlussbuchse (12) angeschlossenem Verbindungskabel ein Ausgangssignal erzeugt, das dem Entzerrer (6) zur Umschaltung der Entzerrercharakteristik zugeführt ist.

7. Diktiergerät nach einem der vorhergehenden Ansprüche,
**dadurch gekennzeichnet, dass**
das Speichermedium eine in das Diktiergerätegehäuse (G) eingelegte Diktiergeräte-Kassette (3) oder ein in das Diktiergerätegehäuse eingesetzter Halbleiterspeicher (17) ist.

8. Diktiergerät nach einem der vorhergehenden Ansprüche,
**dadurch gekennzeichnet, dass**
die weitere Anschlussbuchse (12) zu einer bidirektionalen Signalübertragung vorgesehen ist.

9. System enthaltend ein Diktiergerät nach einem oder mehreren der vorhergehenden Ansprüche zur Eingabe von Sprachsignalen in einen Sprache-Text-Umsetzter, wobei die weitere Anschlussbuchse des Diktiergerätes über ein Verbindungskabel mit einer Eingangsbuchse des Sprache-Text-Umsetzers verbunden ist.

10. System nach Anspruch 9,
**dadurch gekennzeichnet, dass**
die dem Sprache-Text-Umsetzer zugeführten Signale vom Mikrophon des Diktiergerätes abgeleitet sind und dass die dem Sprache-Text-Umsetzer zugeführten Signale vom Speichermedium des Diktiergerätes abgeleitete Signale sind.

## Claims

1. Dictation machine, having a dictation machine housing (G), in which a microphone (1), a speaker (2) and a recording/replay signal processing circuit are provided, the dictation machine housing (G) being provided with a headphone output jack (13), at which output signals are made available during the replay of signals recorded on a signal storage medium,
**characterised in that**
the dictation machine housing (G) is provided with a further connecting jack (12) at which, in a first operating mode, signals derived from the microphone (1) of the dictation machine and, in a second operating mode, signals derived from the signal storage medium (3, 17) are made available.

2. Dictation machine according to claim 1, **characterised in that** the recording/replay signal processing circuit has a recording/replay changeover switch (5), at the first input of which the signal derived from the microphone (1) and at the second input of which the signal derived from the signal storage medium (3, 17) is applied and the output of which is connected to an equaliser circuit (6).

3. Dictation machine according to claim 2, **characterised in that** the signal made available at the further connecting jack (12) is derived from the output of the equaliser circuit (6).

4. Dictation machine according to one of the preceding claims, **characterised in that** the signals supplied to the further connecting jack (12) are conducted via a level alignment step (11).

5. Dictation machine according to claim 4, **characterised in that** the level of the signals made available at the output of the level alignment step (11) is identical.

6. Dictation machine according to one of the preceding claims, **characterised in that** it has a jack occupancy detector (14), which, in the second operating mode, generates an output signal which is supplied to the equaliser (6) to change over the equaliser characteristics when the connection cable is connected to the further connecting jack (12).

7. Dictation machine according to one of the preceding claims, **characterised in that** the storage medium is a dictation machine cassette (3) placed into the dictation machine housing (G) or a semi-conductor memory (17) inserted into the dictation machine housing.

8. Dictation machine according to one of the preceding claims, **characterised in that** the further connecting jack (12) is provided for bi-directional signal transmission.

9. System containing a dictation machine according to one or more of the preceding claims for inputting voice signals into a voice to text converter, the further connecting jack of the dictation machine being connected to an input jack of the voice to text converter via a connection cable.

10. System according to claim 9, **characterised in that** the signals supplied to the voice to text converter are derived from the microphone of the dictation machine and **in that** the signals supplied to the voice to text converter are signals derived from the storage medium of the dictation machine.

## Revendications

1. Dictaphone, comportant un boîtier de dictaphone (G), dans lequel on a prévu 1 microphone (1), un haut-parleur (2) et un circuit d'enregistrement/de traitement des signaux de reproduction, le boîtier du dictaphone (G) étant muni d'une prise femelle pour casque (13), sur laquelle pendant la reproduction de signaux enregistrés sur un support d'enregistrement de signaux, des signaux de sortie sont mis à disposition,
**caractérisé en ce que** le boîtier de dictaphone (G) est muni d'une douille de raccordement supplémentaire (12), sur laquelle dans un premier mode de fonctionnement, des signaux dérivés du microphone (1) du dictaphone et dans un deuxième mode de fonctionnement des signaux dérivés du support d'enregistrement de signaux (3, 17) sont mis à disposition.

2. Dictaphone selon la revendication 1,
**caractérisé en ce que** le circuit d'enregistrement/ de traitement des signaux de reproduction comporte un commutateur enregistrement/reproduction (5), sur la première entrée duquel est appliqué le signal dérivé du microphone (1) et sur la deuxième entrée duquel est appliqué le signal dérivé du support d'enregistrement de signaux (3, 17) et dont la sortie est reliée à un compensateur d'atténuation (6).

3. Dictaphone selon la revendication 2,
**caractérisé en ce que** le signal mis à disposition sur la douille de raccordement supplémentaire (12) est dérivé de la sortie du compensateur d'atténuation (6).

4. Dictaphone selon l'une quelconque des revendications précédentes,
**caractérisé en ce que** les signaux amenés vers la douille de raccordement supplémentaire (12) sont dirigés par l'intermédiaire d'un étage d'adaptation de niveau (11).

5. Dictaphone selon la revendication 4,
**caractérisé en ce que** le niveau des signaux mis à disposition à la sortie de l'étage d'adaptation de niveau (11) est identique.

6. Dictaphone selon l'une quelconque des revendications précédentes,
**caractérisé en ce qu'**il comporte un détecteur d'occupation des douilles (14), qui dans le deuxième mode de fonctionnement, lorsque le câble de liaison est raccordé sur la douille de raccordement supplémentaire (12) génère un signal de sortie qui est amené au compensateur d'atténuation (6), pour la commutation de la caractéristique du compensateur d'atténuation.

7. Dictaphone selon l'une quelconque des revendications précédentes,
**caractérisé en ce que** le support d'enregistrement est une cassette de dictée (3) insérée dans le dictaphone (G) ou une mémoire à semi-conducteurs (17) intégrée dans le boîtier du dictaphone.

8. Dictaphone selon l'une quelconque des revendications précédentes,
**caractérisé en ce que** la douille de raccordement supplémentaire (12) est prévue pour une transmission de signaux bidirectionnelle.

9. Système contenant un dictaphone selon l'une quelconque ou plusieurs des revendications précédentes pour l'introduction de signaux vocaux dans un convertisseur parole/texte, la douille de raccordement supplémentaire du dictaphone étant reliée par l'intermédiaire d'un câble de liaison avec une douille d'entrée du convertisseur parole/texte.

10. Système selon la revendication 9,
**caractérisée en ce que** les signaux amenés au convertisseur parole/texte sont dérivés du microphone du dictaphone et **en ce que** les signaux amenés au convertisseur parole/texte sont des signaux dérivés du support d'enregistrement du dictaphone.
